Europäisches Patentamt

European Patent Office

Office européen des brevets

(11) Veröffentlichungsnummer: **0 418 718 A1**

## (12) EUROPÄISCHE PATENTANMELDUNG

(21) Anmeldenummer: 90117557.0

(22) Anmeldetag: 12.09.90

(51) Int. Cl.⁵: **F16F  13/00**

(30) Priorität: 13.09.89 DE 3930644

(43) Veröffentlichungstag der Anmeldung:
27.03.91 Patentblatt  91/13

(84) Benannte Vertragsstaaten:
DE ES FR GB IT SE

(71) Anmelder: METZELER Gesellschaft mit
beschränkter Haftung
Gneisenaustrasse 15
W-8000 München 50(DE)

(72) Erfinder: Gugsch, Mathias
Wolfratshauser Strasse 40
W-8000 München 70(DE)

(74) Vertreter: Michelis, Theodor, Dipl.-Ing.
Gneisenaustrasse 15
W-8000 München 50(DE)

(54) Hydraulisch dämpfende Buchse.

(57) Die Erfindung betrifft eine hydraulisch dämpfende Buchse mit einem zwischen Innen- und Außenbuchse (1, 2) angeordneten Elastomerkörper (3), der einander gegenüberliegend zwei flüssigkeitsgefüllte Hohlkammern (8, 9) aufweist. Die Hohlkammern (8, 9) sind über einen Hauptkanal (10) und zwei entgegengesetzt durchströmte, ventilgeregelte Hilfskanäe (15) miteinander verbunden.

Zur einfacheren Herstellung mit kleinen Außenabmessungen ist erfindungsgemäß vorgesehen, daß die Buchse nur ein einstückiges Vulkanisationsteil (30) aus Innenbuchse (1) und Elastomerteil (3) aufweist, dessen seitliche, die Hohlkammern (8, 9) bildenden Ausnehmungen (4, 5) durch kreisbogenförmige Schalen (6, 7) abgedeckt sind, in die der Hauptkanal (10) und die über Federzungen (17) abgedeckten Hilfskanäle (15) eingeschnitten sind.

FIG.3

EP 0 418 718 A1

# HYDRAULISCH DÄMPFENDE BUCHSE

Die Erfindung bezieht sich auf eine hydraulisch dämpfende Buchse, insbesondere Querlenkerlager für Kraftfahrzeuge, mit einem zwischen einer zylindrischen Innenbuchse und einer zylindrischen Außenbuchse angeordneten, radial abstützenden Elastomerkörper, der zwei in radialer Richtung einander gegenüberliegende, mit einer hydraulischen Flüssigkeit gefüllte Hohlkammern aufweist, die über einen ständig offenen Überströmkanal und über zwei dazu parallele, je ein unidirektional entgegengesetzt öffnendes Ventil aufweisende Hilfskanäle miteinander in Verbindung stehen.

Ein derartiges Buchsenlager ist aus der EP-B-0 234 966 bekannt. Bei einer solchen hydraulisch gedämpften Buchse werden die dynamischen Kennwerte des Lagers, d.h. die Steifigkeits- und Dämpfungswerte für kleine Schwingungsamplituden, über die Kanalgeometrie des primären Überströmkanals bestimmt, während bei größeren Amplituden, bei denen je nach Richtung der einwirkenden Kräfte und bei entsprechendem Druck einer der Hilfskanäle öffnet, das Zusammenwirken beider Kanalsysteme die Kennwerte bedingen. Durch derartige Hilfskanäle kann dabei bei stoßartiger Belastung, also bei großen Amplituden und hoher Bewegungsgeschwindigkeit, die Steifigkeit er Buchse herabgesetzt und die Dämpfungswerte verbessert werden.

Die bekannte Buchse ist jedoch zur Festlegung der einzel nen Kanalgeometrien aus mehreren Teilen von Elastomeren unterschiedlicher Härte aufgebaut und bedingt dadurch einen sehr komplizierten Aufbau und einen hohen Fertigungsaufwand. Außerdem baut eine solche Buchse relativ groß.

Der vorliegenden Erfindung liegt demgegenüber die Aufgabe zugrunde, eine hydraulisch dämpfende Buchse zu schaffen, die sehr einfach aus nur wenigen Einzelteilen aufgebaut ist und die dabei von ihrem Volumen her nicht größer ist als eine herkömmliche, allein durch die Elastomereigenschaften gedämpfte Querlenkerbuchse. Ferner soll durch eine entsprechende Formgebung des Elastomerteils der Buchse ein relativ großer Freiweg für radiale Verlagerungen ohne nennenswerte Zugspannungen ermöglicht werden.

Zur Lösung dieser Aufgabe ist erfindungsgemäß vorgesehen, daß die Buchse ein einziges einstückiges, in die Außenbuchse eingeschobenes Vulkanisationsteil aus Innenbuchse mit anvulkanisiertem zylindrischem Elastomerkörper und einer im äußeren Bereich einvulkanisierten Zwischenhülse aufweist, bei dem die Hohlkammern durch zwei im Querschnitt kreissegmentförmige, nach außen offene Ausnehmungen im Elastomerteil und der Zwischenhülse gebildet sind, die durch kreisbogenförmige Schalen gleicher Breite abgedeckt sind, in deren von der Außenbuchse abgedeckten Außenflächen sowie den entsprechenden Außenflächen des Elastomerkörpers der Hauptkanal und die beiden Hilfskanäle eingeschnitten sind, die über die Schalen durchsetzende Bohrungen mit den Hohlkammern in Verbindung stehen.

Damit weist das sehr kompakt aufgebaute Buchsenlager innerhalb der Außenbuchse nur noch drei Einzelteile auf, nämlich die beiden identisch gestalteten Schalen und den mit der Innenbuchse einstückigen Elastomerteil, so daß sich Herstellung und Montage äußerst einfach gestalten, so daß dabei auch Fehlerquellen und Nachteile für die Funktionsfähigkeit sicher vermieden werden.

Die beiden kreisbogenförmigen Schalen aus Metall oder Kunststoff weisen dabei zweckmäßigerweise über einen vorgegebenen Umfangsbereich auf ihrer Außenseite je einen nutförmigen Einschnitt für den Hauptkanal auf, der eine Umfangskante der Schalen anschneidet und am anderen Ende in einer die Schale durchsetzenden Bohrung endet.

Bei den gleichartig gestalteten Hilfskanälen ist dann zusätzlich jede Bohrung auf der Innenseite mit einer laschenartigen, bei vorgegebenem Druck öffnenden Federzunge als undirektional wirkendes Ventil abgeschlossen.

Diese Federzungen können durch seitlich an den Elastomerkörper anvulkanisierte, in Richtung der Ausnehmungen abragende Gummilaschen gebildet sein, die sich nach dem Zusammenbau der Buchse gegen die Bohrungen der Hilfskanäle legen und diese druckabhängig verschließen. Es ist aber auch möglich, daß die Federzungen durch auf der Innenseite der Schalen befestigte und die Hilfskanalbohrungen mit ihren freien Enden überdeckende Federstahlplättchen gebildet sind.

Zweckmäßigerweise ist an der gleichen Umfangskante des einen Hilfskanals ein von der Innenseite der Schale tangential ausmündender Anschnitt als Einlaß für den zweiten, entgegengesetzt durchströmten Hilfskanal vorgesehen.

Eine besonders günstige Gestaltung ergibt sich, wenn die nutförmigen Einschnitte für den Hauptkanal sich zu einer Umfangskante und die Einschnitte für die Hilfskanäle sich zur anderen Umfangskante der Schalen erstrecken und nach spiegelbildlichem Einsetzen mit entsprechenden Einschnitten auf den stehengebliebenen Umfangsflächen des Elastomerköpers fluchten.

Ferner können die Elastomerkörper im der Innenbuchse benachbarten Bereich der Ausnehmungen mindestens je einen kuppelförmigen Aufsatz aus Elastomermaterial als Radialanschlag aufweisen.

Anhand einer schematischen Zeichnung sind Aufbau und Funktionsweise von Ausführungsbeispielen nach der Erfindung näher erläutert. Dabei zeigen

Fig. 1 einen Längsschnitt durch eine solche Buchse in der Horizontalebene,

Fig. 2 einen Längsschnitt durch diese Buchse in der vertikalen Ebene, wie durch die Schnittlinien näher angedeutet,

Fig. 3 einen Querschnitt entsprechend der Schnittlinie III-III nach Fig. 2 im Bereich des einen Hilfskanals,

Fig. 4 einen Querschnitt entsprechend der Schnittlinie IV-IV nach Fig. 2 im Bereich des Hauptüberströmkanals,

Fig. 5 einen Querschnitt entsprechend der Schnittlinie V-V nach Fig. 2 im Bereich des anderen Hilfskanals,

Fig. 6 einen Längsschnitt durch das eigentliche Vulkanisationsteil,

Fig. 7 eine perspektivische Ansicht von außen auf eine der kreisbogenförmigen Schalen,

Fig. 8 eine perspektivische Ansicht auf die Innenseite dieser Schale und

Fig. 9 einen Querschnitt durch eine Buchse mit an den Elastomerkörper anvulkanisierten Ventillaschen, etwa entsprechend der Schnittlinie III-III nach Fig. 2.

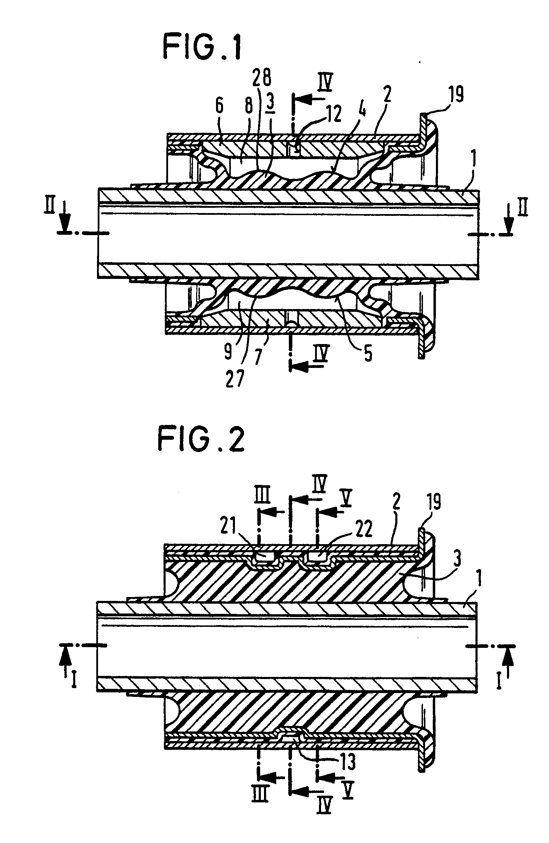

Wie man zunächst aus den Fig. 1, 2 und 4 ersieht, weist eine derartige hydraulisch gedämpfte Buchse eine zylindrische Innenbuchse 1 und eine zylindrische Außenbuchse 2 auf, zwischen denen ein radial abstützender, einstückiger Elastomerkörper 3 angeordnet ist, der an die Innenbuchse 1 in einem Stück anvulkanisiert ist. Im äußeren Bereich des Elastomerkörpers 3 ist dabei noch eine Zwischenhülse 19 einvulkanisiert, um dem Vulkanisationsteil die nötige Formsteifigkeit zu verleihen. Dieser Elastomerkörper 3 mit der Zwischenhülse 19 weist auf beiden sich radial gegenüberliegenden Seiten angenähert kreissegmentförmige Ausnehmungen entsprechend den Konturen 4 und 5 auf, die zunächst nach außen offen sind und dann durch die beiden kreisbogenförmigen Schalen 6 und 7 aus Kunststoff oder Metall verschlossen werden, wenn die Außenbuchse 2 übergepreßt wird. Zwischen diesen beiden Schalen 6 und 7 sowie dem Elastomerkörper 3 werden somit die beiden Hohlkammern 8 und 9 gebildet, die mit einer Flüssigkeit gefüllt sind und in folgender Weise miteinander in Verbindung stehen.

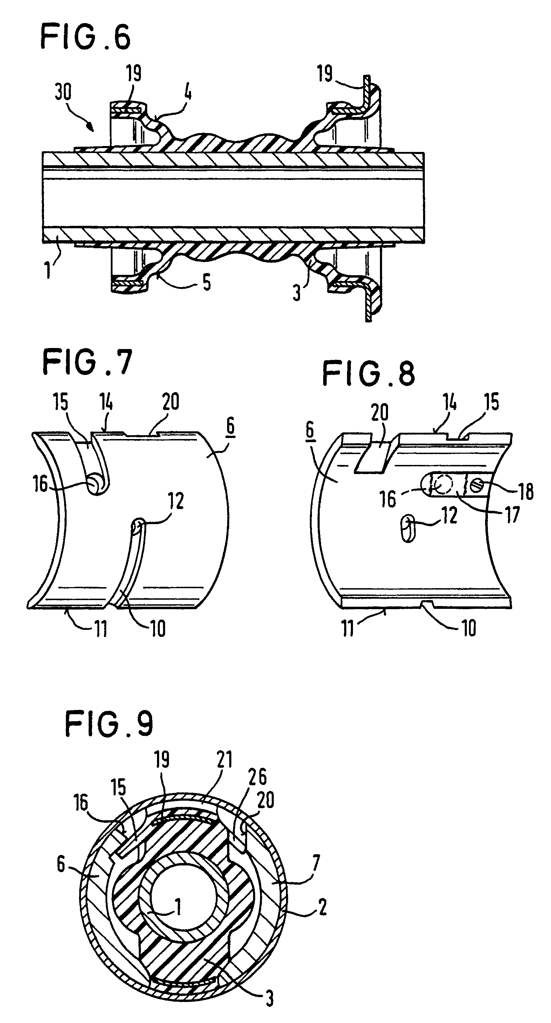

Eine der beiden Schalen 6 bzw. 7, die identisch ausgebildet sind, ist in perspektivischer Ansicht von außen und von innen in Fig. 7 und 8 dargestellt. Danach ist zunächst in die Außenseite der Schale 6 über einen vorgegebenen Umfangsbereich etwa in der Mitte der Schalenbreite ein nutförmiger Einschnitt 10 vorgesehen, der die eine Umfangskante 11 der Schale 6 anschneidet und der am anderen Ende - etwa in der Mitte der Umfangsfläche - in einer die Schale 6 durchsetzenden Bohrung 12 endet. In gleicher Weise ist im unteren Bereich des Elastomerkörpers 3, und zwar in dessen stehengebliebenem Umfangsbereich, ein entsprechender Einschnitt 13 unter entsprechender Einziehung der Zwischenhülse 19 vorgesehen. Nach Zusammenbau der Buchse und Überschieben der Außenbuchse 2 bilden dann die nutförmigen Einschnitte 10 in den Schalen 6 und 7 zusammen mit dem Einschnitt 13 einen durchgehend fluchtenden Kanal, der über die Bohrungen 12 jeweils in die beiden Hohlkammern 8 und 9 mündet und diese dadurch verbindet.

Bei entsprechenden radialen Belastungen kleiner Amplitude und dadurch bedingter Verkleinerung beispielsweise der linken Kammer 8 und Vergrößerung der rechten Kammer 9, erfolgt somit ein Flüssigkeitsaustausch über die Kanalabschnitte 10, 13, die durch eine entsprechende Kanalgeometrie eine hydraulische Dämpfung der Lagerbuchse bewirken.

Zusätzlich weisen die Schalen 6 und 7 einen sich zweckmäßigerweise zur anderen Umfangskante 14 erstreckenden nutförmigen Einschnitt 15 auf, der in einer die Schale 6 durchsetzenden Bohrung 16 endet. Wie man aus der Ansicht auf die Innenseite der Schale 6 nach Fig. 8 ersieht, ist dabei diese Bohrung 16 mit einem Federstahlplättchen 17 verschlossen, das seitlich neben der Bohrung 16 beispielsweise über eine Schraube 18 gegen die Schale 6 verspannt ist. Gleichzeitig weist die Schale 6 im an die Umfangskante 14 angrenzenden Bereich einen von der Innenseite der Schale tangential ausmündenden Anschnitt 20 auf, der den Einlaß des anderen Hilfskanals bildet.

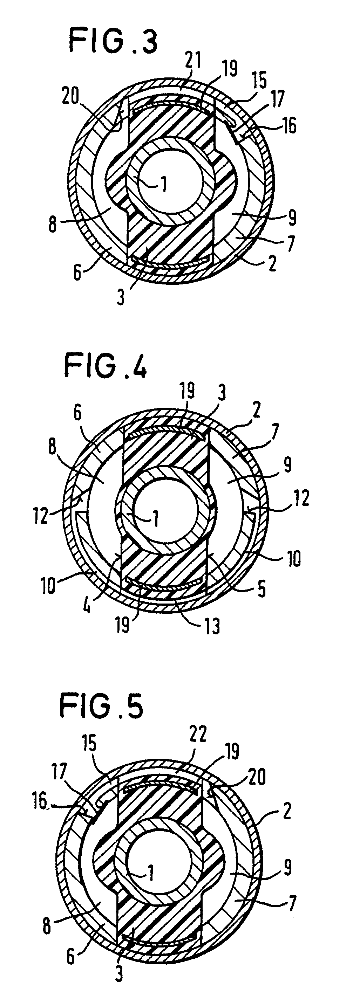

Damit ergibt sich beim Zusammenbau der Buchse entsprechend Fig. 3 über den im oberen Bereich des Elastomerkörpers 3 vorgesehenen Einschnitt 21 ein Hilfskanal, der sich über die Federlasche 17 in die Kammer 9 öffnet, wodurch bei größeren stoßartigen Belastungen mit entsprechend großen Amplituden zusätzlich zum Hauptkanal 10, 13 Flüssigkeit von der Kammer 8 in die Kammer 9 strömt, wobei entsprechend der Kanalgeometrie eine zusätzliche Dämpfung und Absenkung der Steifigkeit erfolgt.

Der in anderer Richtung über den Einschnitt 22 im Elastomerkörper 3 durchströmte Hilfskanal entsprechend Fig. 5 ermöglicht dann bei einer entsprechenden Belastung einen Flüssigkeitsaustausch von der Kammer 9 in die Kammer 8 mit entsprechender Dämpfung.

Eine andere Möglichkeit der Gestaltung der Federzunge zum Abschluß der Hilfskanäle ist in dem Querschnitt nach Fig. 9 gezeigt, der in etwa dem Querschnitt nach Fig. 3 entspricht. Danach ist am oberen Ende des Elastomerkörpers 3 seitlich abragend eine Gummilasche 25 anvulkanisiert, die unter entsprechender Vorspannung ebenfalls die Bohrung 16 abschließt.

Die entsprechende Gummilasche 26 für den anderen Hilfskanal ist auf der gegenüberliegenden Seite dahinterliegend ungeschnitten gezeichnet.

Insgesamt ist also eine hydraulisch dämpfende Buchse geschaffen, die lediglich ein einziges Vulkanisationsteil 30 aus Innenbuchse 1, Elastomerteil 3 und Zwischenhülse 19 aufweist, wie das nochmals in Fig. 6 im einzelnen dargestellt ist. Dieses Vulkanisationsteil 30 kann dann mit den beiden Schalen 6 und 7 in die Außenbuchse 2 auf ein fache Weise eingepreßt werden kann. Dadurch, daß dann sowohl der Hauptkanal 10, 13 als auch die Hilfskanäle 15, 21 bzw. 15, 22 am Außenumfang der Buchseninnenteile auf praktisch gleichem Durchmesser verlaufen, werden diese bei auftretenden Stößen auch in gleicher Weise belastet, so daß bei entsprechender Vorspannung der Federzungen 17 bzw. 25 auch ein genau definierter Öffnungspunkt für die Hilfskanäle geschaffen werden kann.

Nach dem dargestellten Ausführungsbeispiel beträgt die Länge des Hauptkanals 10, 13 etwa 3/4 des gesamten Buchsenumfangs. Es ist aber auch möglich, durch eine entsprechende wendelförmige Gestaltung eine Kanallänge von einem Mehrfachen des Buchsenumfanges zu erreichen, um damit die Dämpfung entsprechend anpassen zu können.

Ferner ermöglicht die Formgebung der die Flüssigkeitskammern begrenzenden Seitenteile einen Freiweg von etwa 10 % des Buchsendurchmessers, ohne daß nennenswerte Zugspannungen auftreten.

**Ansprüche**

1. Hydraulisch dämpfende Buchse, insbesondere Querlenkerlager für Kraftfahrzeuge, mit einem zwischen einer zylindrischen Innenbuchse und einer zylindrischen Außenbuchse angeordneten, radial abstützenden Elastomerkörper, der zwei in radialer Richtung einander gegenüberliegende, mit einer hydraulischen Flüssigkeit gefüllte Hohlkammern aufweist, die über einen ständig offenen Überströmkanal und über zwei dazu parallele, je ein unidirektional, entgegengesetzt öffnendes Ventil aufweisende Hilfskanäle miteinander in Verbindung stehen, dadurch gekennzeichnet, daß die Buchse ein einziges einstückiges, in die Außenbuchse (2) eingeschobenes Vulkanisationsteil (30) aus Innenbuchse (1) mit anvulkanisiertem, zylindrischem Elastomerkörper (3) und einer im äußeren Bereich einvulkanisierten Zwischenhülse (19) aufweist, bei dem die Hohlkammern (8, 9) durch zwei im Querschnitt kreissegmentförmige, nach außen offene Ausnehmungen (4, 5) im Elastomerteil (3) und der Zwischenhülse (19) gebildet sind, die durch kreisbogenförmige Schalen (6, 7) gleicher Breite abgedeckt sind, in deren von der Außenbuchse (2) abgedeckten Außenflächen sowie der entsprechenden Außenflächen des Elastomerkörpers (3) der Hauptkanal (10, 13) und die beiden Hilfskanäle (15, 21; 15, 22) eingeschnitten sind, die über die Schalen (6, 7) durchsetzende Bohrungen (12, 16) mit den Hohlkammern (8, 9) in Verbindung stehen.

2. Buchse nach Anspruch 1, dadurch gekennzeichnet, daß die beiden kreisbogenförmigen Schalen (6, 7) aus Metall oder Kunststoff über einen vorgegebenen Umfangsbereich auf ihrer Außenseite je einen nutförmigen Einschnitt (10) für den Hauptkanal aufweisen, der eine Umfangskante (11) anschneidet und am anderen Ende in einer die Schalen (6, 7) durchsetzenden Bohrung (12) endet.

3. Buchse nach Anspruch 1 und 2, dadurch gekennzeichnet, daß jede der beiden Schalen (6, 7) über einen vorgegebenen Umfangsbereich auf ihrer Außenseite einen weiteren nutförmigen Einschnitt (15) für einen der Hilfskanäle aufweist, der eine Umfangskante (14) anschneidet und am anderen Ende in einer die Schalen (6, 7) durchsetzenden Bohrung (16) endet, welche Bohrung (16) auf der Innenseite mit einer laschenförmigen, bei vorgegebenem Druck öffnenden Federzunge (17; 25, 26) als unidirektional wirkendes Ventil abgeschlossen ist.

4. Buchse nach Anspruch 3, dadurch gekennzeichnet, daß die Federzungen durch seitlich an den Elastomerkörper (3) anvulkanisierte, in Richtung der Ausnehmungen (4, 5) abragende Gummilaschen (25, 26) gebildet sind.

5. Buchse nach Anspruch 3, dadurch gekennzeichnet, daß die Federzungen durch auf der Innenseite der Schalen (6, 7) befestigte und die Hilfskanalbohrungen (16) mit ihren freien Enden überdeckende Federstahlplättchen (17) gebildet sind.

6. Buchse nach Anspruch 3, dadurch gekennzeichnet, daß an der gleichen Umfangskante (14) des einen Hilfskanals (15) ein von der Innenseite der Schale (6, 7) tangential ausmündender Anschnitt (20) als Einlaß für den zweiten, entgegengesetzt durchströmten Hilfskanal vorgesehen ist.

7. Buchse nach den Ansprüchen 2 bis 4, dadurch gekennzeichnet, daß die nutförmigen Einschnitte (10) für den Hauptkanal sich zur einen Umfangskante (11) und die Einschnitte (15, 20) flir die Hilfskanäle sich zur anderen Umfangskante (14) erstrecken und nach spiegelbildlichem Einsetzen mit entsprechenden Einschnitten (13; 21, 22) auf den stehengebliebenen Umfangsflächen des Elastomerkörpers (3) fluchten.

8. Buchse nach Anspruch 1, dadurch gekennzeichnet, daß der Elastomerkörper (3) im der Innenbuchse (1) benachtbarten Bereich der Ausnehmungen (4, 5) mindestens je einen kuppelförmigen Aufsatz (27, 28) als Radialanschlag aufweist.

9. Buchse nach Anspruch 1 bis 8, dadurch gekennzeichnet, daß der Vulkanisationskörper (30) zusammen mit den aufgesetzten, die Ausnehmungen (4, 5) abdeckenden Schalen (6, 7) in die Außenbuchse (2) eingepreßt ist.

# FIG.1

# FIG.2

FIG .3

FIG .4

FIG .5

7

## FIG.6

30 · 19 · 4 · 19 · 1 · 5 · 3

## FIG.7

15 · 14 · 20 · 6 · 16 · 12 · 11 · 10

## FIG.8

20 · 14 · 15 · 6 · 16 · 18 · 17 · 12 · 11 · 10

## FIG.9

19 · 21 · 26 · 16 · 15 · 20 · 6 · 7 · 1 · 2 · 3

**Europäisches Patentamt**

**EUROPÄISCHER RECHERCHENBERICHT**

Nummer der Anmeldung

**EP 90 11 7557**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | EP-A-0 332 901 (METZELER GMBH) <br> * das ganze Dokument * <br> – – – | 1 | F 16 F 13/00 |
| A,D | EP-A-0 234 966 (AUTOMOBILES PEUGEOT ET AL.) <br> * Spalte 3, Zeile 61 - Spalte 5, Zeile 17; Figur 8 * <br> – – – | 1 | |
| A | DE-A-3 617 787 (NISSAN MOTOR CO LTD) <br> – – – – – | | |

RECHERCHIERTE SACHGEBIETE (Int. Cl.5)

F 16 F

Der vorliegende Recherchenbericht wurde für alle Patentansprüche erstellt

| Recherchenort | Abschlußdatum der Recherche | Prüfer |
|---|---|---|
| Den Haag | 28 Januar 91 | PEMBERTON P.E.E. |